Europäisches Patentamt

European Patent Office

Office européen des brevets

(19)

(11) Numéro de publication : **0 441 670 A1**

## (12) DEMANDE DE BREVET EUROPEEN

(21) Numéro de dépôt : 91400138.3

(22) Date de dépôt : 22.01.91

(51) Int. Cl.⁵ : **G05D 1/10, F42B 15/01, F42B 10/14**

(30) Priorité : 26.01.90 FR 9000945

(43) Date de publication de la demande : 14.08.91 Bulletin 91/33

(84) Etats contractants désignés : BE CH DE ES GB IT LI SE

(71) Demandeur : THOMSON-BRANDT ARMEMENTS
Tour Chenonceaux 204, rond-point du Pont de Sèvres
F-92516 Boulogne-Billancourt (FR)

(72) Inventeur : **Wisshaupt, Daniel**
**THOMSON-CSF, SCPI, Cédex 67**
**F-92045 Paris la Défense (FR)**

(74) Mandataire : **Benoit, Monique et al**
**THOMSON-CSF SCPI**
**F-92045 PARIS LA DEFENSE CEDEX 67 (FR)**

(54) **Dispositif pour la commande d'attitude en roulis d'un projectile stabilisé par empennage.**

(57) Dispositif simple de commande en roulis d'un projectile stabilisé par empennage arrière (4).
Le socle (6) de chaque ailette est fixé par deux articulations, dont l'une (10) est reliée à tambour fixe (12), tandis que l'autre (14) est reliée à une bague (16) qui est libre de se mouvoir de quelques degrés, dans un sens comme dans l'autre, autour de l'axe (17) du projectile, sous commande d'un actuateur (18, 19, 20), ce qui crée un moment de roulis sur le projectile.

Fig.3

# DISPOSITIF POUR LA COMMANDE D'ATTITUDE EN ROULIS D'UN PROJECTILE STABILISE PAR EMPENNAGE

La présente invention se rapporte à un dispositif pour la commande d'attitude en roulis d'un projectile stabilisé par empennage.

La réalisation de certaines missions particulières dévolues à des systèmes d'armes impose le principe de la stabilisation en roulis des munitions mises en oeuvre par ces systèmes, ce qui nécessite qu'une commande d'attitude en roulis puisse être en permanence effectué sur ces projectiles. Il en est ainsi en particulier pour les munitions anti-char à attaque en survol où la direction d'attaque de la charge n'est plus confondue avec le vecteur vitesse et où la position en roulis doit être maîtrisée afin de déclencher la charge dans une direction parfaitement connue. Ce cas se présente également pour les munitions antihélicoptère si l'on choisit un principe de guidage en roulis stabilisé et où s'avèrent nécessaires la détermination d'une référence angulaire et le pilotage en roulis du projectile en fonction de cette référence.

Par ailleurs, il est dans certains cas nécessaire, sur ces projectiles, d'effectuer la commande d'une évolution particulière en roulis, par exemple pour créer un mouvement de balayage par un détecteur fixe dont est équipé cet engin.

Il est connu de commander l'attitude des missiles guidés au moyen d'empennages qui sont spécialement prévus à cet effet. L'attitude devant, sur ces missiles guidés, être commandée selon les trois axes : lacet, roulis, tangage, ces missiles sont équipés de plusieurs moteurs qui sont commandés séparément pour obtenir le mouvement souhaité, ce qui conduit à des dispositifs lourds, complexes, et onéreux.

L'invention vise à remédier à cet inconvénient dans le cas particulier où il s'agit d'un projectile déjà équipé d'un empennage de stabilisation, à ailettes sensiblement planes, et pour lequel il n'est souhaité qu'une commande d'attitude en roulis. A noter qu'un tel empennage, équipant la queue du projectile, est de toute façon nécessaire pour, en reculant le centre d'application des forces aérodynamiques en arrière du centre de gravité, stabiliser la munition pour éviter son basculement. Chacune des ailettes de l'empennage est alors normalement contenue dans un plan méridien du projectile supposé de révolution. Il est alors possible de créer un moment de roulis s'exerçant sur la munition en faisant tourner l'ensemble des ailettes simultanément et dans le même sens autour d'une direction longitudinale de chaque ailette, située dans le plan méridien qui contient l'ailette à l'origine, c'est-à-dire avant cette rotation. Selon l'invention, ce résultat est obtenu de manière simple par le fait que, chaque ailette étant équipée d'un "pied" en forme de socle orthogonal à cette ailette, chaque pied d'ailette à premier point d'attache solidaire, de manière souple ou articulée, d'une partie fixe solidaire du corps du projectile et un autre point d'attache qui est distant du premier et solidaire , de manière souple ou articulée, d'une bague commune qui est montée libre en rotation autour de l'axe longitudinal du projectile, des moyens étant prévus pour entraîner, sur un angle limité, la rotation de cette bague dans un sens ou dans l'autre afin de faire alors tourner chaque ailette autour d'un axe situé dans le plan de l'ailette et perpendiculaire à un plan du socle constituant le pied de l'ailette, pour entraîner de ce fait la création d'un moment de roulis sur ce projectile, dans un sens ou dans l'autre.

Avantageusement, ledit premier point d'attache est solidaire d'un tambour fixe de diamètre sensiblement égal à celui de la bague rotative.

De toute façon, l'invention sera bien comprise, et ses avantages et autres caractéristiques ressortiront, lors de la description suivante d'un exemple non limitatif de réalisation, en référence au dessin schématique annexé dans lequel :

– Figure 1 est une vue d'ensemble simplifiée du projectile ;
– Figure 2 est une vue en perspective de son dispositif de commande d'attitude en roulis, avec les ailettes dans leur plan méridien d'origine ; et
– Figure 3 montre ce même dispositif avec les ailettes dans une position créant un moment de roulis.

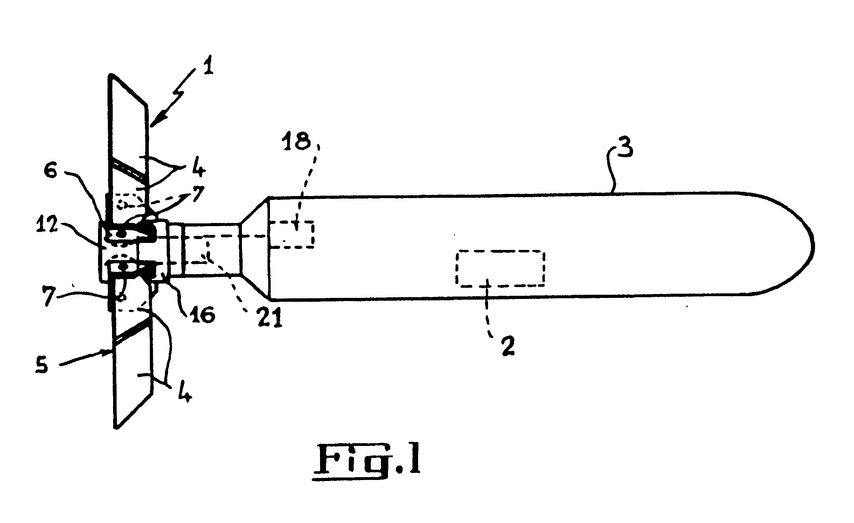

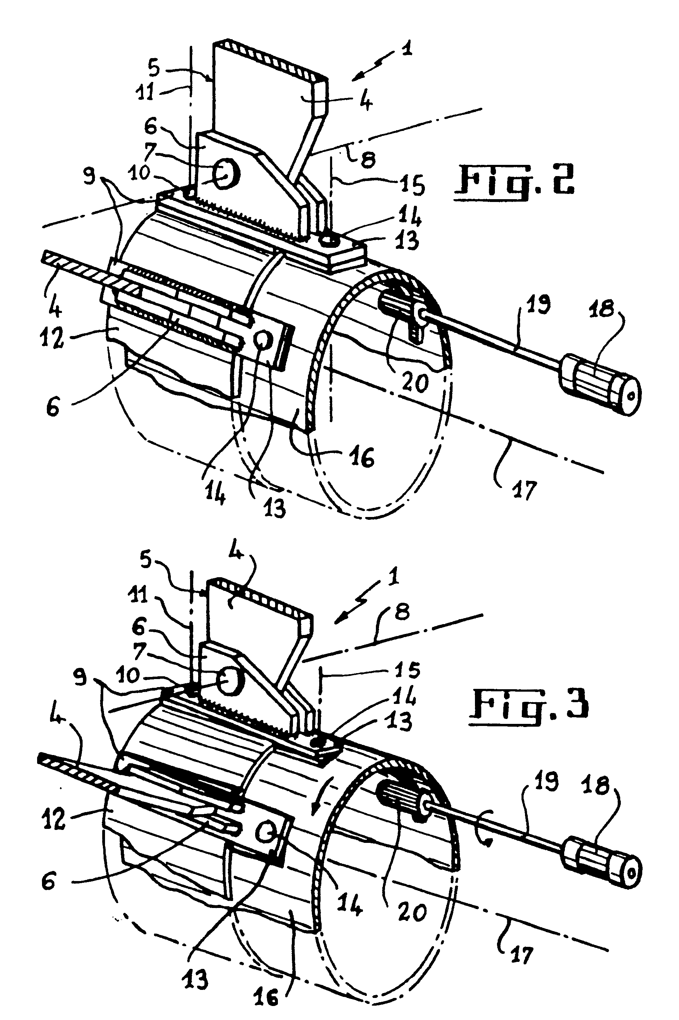

En se référant à la figure 1, il s'agit d'un projectile simple du genre projectile d'artillerie ou d'arme d'infanterie (munition anti-char ou autre) qui est classiquement stabilisé par un empennage arrière 1. Ce projectile est cependant équipé d'un calculateur 2, placé à l'intérieur de son corps principal 3, qui transmet des ordres de stabilisation en roulis à un actuateur de roulis comportant, d'une manière générale, l'empennage arrière et un dispositif d'orientation des pales 4 des ailettes 5 de cet empennage qui est représenté plus en détail sur la figure 2. Le calculateur 2 reçoit des informations d'un ou plusieurs capteurs de roulis, à gyromètre ou à capteurs optiques par exemple, qui n'ont pas été représentés sur le dessin.

En se réportant plus particulièrement à la figure 2, chaque ailette 5 est composée classiquement d'un plan allongé 4 et d'un socle ou "pied" 6. La base de chaque ailette est fixée, toujours classiquement, par une articulation, d'axe 8 perpendiculaire au plan de l'ailette, sur ce pied 6 de façon à ce que l'ailette puisse se déployer normalement au projectile après l'éjection de ce dernier hors du tube-lanceur lors du tir de la munition.

Chaque pied d'ailette 6 est, conformément à l'invention, fixé de manière légèrement articulée sur le corps 3 de projectile. Pour ce faire, une première extrémité 9 de ce pied 6 est fixé, par une articulation 10 d'axe 11 parallèle à l'axe longitudinal de l'ailette déployée 4, à un tambour arrière 12 solidaire du corps du projectile, tandis que l'autre extrémité 13 du pied 6 est fixée, par une autre articulation 14 d'axe 15 parallèle à l'axe 11 précité, sur une bague 16 qui a sensiblement le même diamètre que le tambour fixe 12 mais qui est montée libre en rotation sur le corps 3 du projectile et autour de son axe longitudinal 17. L' articulation 14 présente un jeu suffisant où la souplesse requise pour permettre une légère rotation de la bague 16, dans un sens comme dans l'autre.

A partir de sa position de repos de la figure 2, pour laquelle les ailettes 4 sont toutes orientées selon des plans méridiens, la bague 16 peut tourner de quelques degrés, dans un sens comme dans l'autre, sous l'action d'un moteur électrique 18 commandé par le calculateur 2 et dont l'arbre 19 entraîne un pignon moteur 20 dont la denture coopère avec un engrenage prévu sur la face intérieure de la bague 16.

En se reportant également à la figure 3, la rotation de l'arbre 19 du moteur 18 entraîne celle de la bague 16, et par suite la rotation simultanée de toutes les ailettes 5, autour d'un axe situé dans leur plan 4 et sensiblement perpendiculaire à celui, 17, du projectile. Cette rotation, bien que ne s'exerçant que sur quelques degrés au maximum, crée un moment selon l'axe de roulis du projectile, qui permet de le commander en roulis conformément aux consignes données par le calculateur 2.

Au lieu d'une stabilisation indexée par rapport au sol, il est bien entendu possible également au calculateur 2 de commander ainsi, par une succession d'ordres déterminés, une évolution particulière en roulis, tel qu'un balayage par exemple.

Cette commande d'attitude en roulis n'est pas incompatible d'un système de déploiement de l'empennage permettant à la munition de rentrer dans le calibre de l'arme utilisée pour son lancement : le dispositif qui vient d'être décrit ne prend en effet aucune place en dehors du calibre du projectile.

Comme il va de soit, l'invention n'est pas limitée à l'exemple de réalisation qui vient d'être décrit ci-dessus. Le nombre d'ailettes de l'empennage est arbitraire. Le moteur 18 peut être remplacé par un vérin, ou autre actuateur équivalent. Au lieu d'être un actuateur électrique, il peut s'agir d'un actuateur pneumatique mettant alors avantageusement à profit la pression générée dans le propulseur de croisière 21 disposé dans la queue du projectile. Les positions relatives de la bague rotative 16 et du tambour fixe 12 peuvent être inversées, la bague 16 étant alors placée derrière le tambour 12 et non pas devant. Les articulations mécaniques 10 et 14, peuvent être, dans un souci de simplification de la réalisation, remplacées par des liaisons souples du genre lames de ressort, prévues en acier inoxydable par exemple, l'empennage du projectile peut être fixe, etc...

## Revendications

1. - Dispositif pour la commande d'attitude en roulis d'un projectile stabilisé par empennage (1), caractérisé en ce que, chaque ailette (5) de l'empennage (1) étant équipée d'un "pied" en forme de socle orthogonal à cette ailette, chaque pied d'ailette (6) a un premier point d'attache (10) solidaire, de manière souple ou articulée, d'une partie fixe (12) solidaire du corps (3) du projectile et un autre point d'attache (14) qui est distant du premier (10) et solidaire, de manière souple ou articulée, d'une bague commune (16) montée libre en rotation autour de l'axe longitudinal (17) du projectile, des moyens (2, 18, 19, 20) étant prévus pour entraîner, sur un angle limité, la rotation de cette bague (16) dans un sens comme dans l'autre afin de faire alors tourner chaque ailette (5) autour d'un axe situé dans son plan (4) et sensiblement perpendiculaire à l'axe (17) du projectile, pour entraîner de ce fait, dans un sens ou dans l'autre, la création d'un moment de roulis sur ce projectile.

2. - Dispositif de commande d'attitude en roulis selon la revendication 1, caractérisé en ce que le dit premier point d'attache (10) est solidaire d'un tambour fixe (12) de diamètre sensiblement égal à celui de la bague rotative (16).

3. - Dispositif de commande d'attitude en roulis selon l'une des revendications 1 ou 2, caractérisé en ce que l'angle de rotation de la bague rotative (16) est limité à quelques degrés.

4. - Dispositif de commande d'attitude selon l'une des revendications 1 à 3, caractérisé en ce que les moyens d'entraînement en rotation de la bague (16) comprennent un actuateur pneumatique utilisant la pression générée dans un propulseur de croisière (21) équipant ce projectile.

Fig.1

Fig. 2

Fig. 3

EP 0 441 670 A1

| | Office européen des brevets | RAPPORT DE RECHERCHE EUROPEENNE | Numero de la demande |
| | | | EP 91 40 0138 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 226 641 (ETAT FRANCAIS)<br>* page 5, ligne 37 – page 7, ligne 36; figure 1 *<br>--- | 1,4 | G 05 D 1/10<br>F 42 B 15/01<br>F 42 B 10/14 |
| A | FR-A-2 608 750 (THOMSON BRAND/ARMEMENTS)<br>* page 4, ligne 1 – page 6, ligne 19; figure 2 *<br>--- | 1 | |
| A | CH-A- 567 708 (C.N.I.M.)<br>* colonne 1, ligne 45 – colonne 2, ligne 33; figures 1,2 *<br>----- | 1 | |

DOMAINES TECHNIQUES RECHERCHES (Int. Cl.5)

G 05 D 1/00
F 42 B 15/00
F 42 B 10/00

Le présent rapport a été établi pour toutes les revendications

| Lieu de la recherche | Date d'achèvement de la recherche | Examinateur |
|---|---|---|
| BERLIN | 22-04-1991 | WEIHS J.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..............................................................................
& : membre de la même famille, document correspondant

EPO FORM 1503 03.82 (P0402)

6